# FASCICULE DE BREVET EUROPEEN

(11) **EP 0 539 307 B1**
(45) Date de publication et mention de la délivrance du brevet: **09.08.1995**
(21) Numéro de dépôt: 92420377.1
(22) Date de dépôt: 23.10.1992
(51) Int. Cl.: A47J 31/54, A47J 27/00

(54) **Système de maintien d'un élément chauffant, et article électroménager comportant un tel système**
System zur Unterstützung eines Heizelementes, und Haushaltsgerät mit einem solchen System
Supporting system for a heating element, and household appliance comprising such system

(30) Priorité: 24.10.1991 FR 9113363
(43) Date de publication de la demande: 28.04.1993
(73) Titulaire: SEB S.A., 69130 Ecully (FR)
(72) Inventeur: Albendin, Georges, 65100- Lourdes (FR)

(56) Documents cités:
- FR-A- 2 501 490
- US-A- 4 215 267
- US-A- 4 356 381

## Description

La présente invention se rapporte au domaine technique général des systèmes de maintien en appui relatif de deux ensembles aux fonctions spécifiques en vue d'obtenir une fonction résultante.

La présente invention concerne un système de maintien en appui relatif d'un élément chauffant contre une surface à chauffer, la fonction résultante générale étant donc l'émission de chaleur à partir de la surface à chauffer, l'énergie thermique initiale étant fournie par l'élément chauffant.

La présente invention se rapporte plus particulièrement, mais non exclusivement, à un système de maintien en appui relatif d'un élément chauffant du type à résistance ou à vapeur tels que ceux utilisés dans les articles électroménagers, notamment dans les cafetières, pour assurer le maintien en température d'une surface à chauffer constituée du support de la verseuse.

Dans les cafetières filtre, il est déjà connu de maintenir en appui relatif à l'intérieur d'un réceptacle, un élément chauffant, constitué d'une pièce tubulaire, contre la face inférieure d'une plaque métallique dont la face supérieure est destinée à assurer le support de la verseuse de la cafetière ainsi que son maintien à une température de consigne. Le système de maintien en appui relatif comporte une pièce métallique, du type étrier ou épingle, disposée sous l'élément chauffant et en appui contre ce dernier, ladite pièce métallique étant supportée par le fond du réceptacle. L'effort de maintien de l'élément chauffant est donc assuré par la pièce métallique et par son élasticité. Une réalisation similaire est également décrite dans le brevet US-A-4.215.267 relatif à un appareil de réchauffage pour aliments. Dans ce document la structure chauffante comporte une plaque intermédiaire en matériau réfractaire, supportant la résistance de chauffe, la structure chauffante étant montée en compression élastique par l'intermédiaire d'un ressort afin d'appliquer la résistance chauffante contre le fond du réceptacle de l'appareil. Les deux réalisations connues de l'art antérieur et décrites précédemment souffrent d'un certain nombre d'inconvénients. En premier lieu il convient de remarquer que le recours à des pièces métalliques est à l'origine de la création d'un pont thermique entre l'élément chauffant et la pièce métallique de maintien. La présence de ce pont thermique est bien évidemment préjudiciable à l'équilibre thermique recherché puisqu'il s'agit d'une perte thermique, ce qui implique d'avoir recours à un élément chauffant surpuissant. Il doit également être noté que le recours à une pièce métallique de soutien du type mentionné précédemment nécessite pour son passage, son introduction et sa mise en place à l'intérieur du réceptacle, la réalisation d'une pièce spécialement conformée, d'un prix élevé en regard de sa simple fonction de maintien. Il convient également de réaliser que le montage d'une telle pièce de soutien à l'intérieur du réceptacle est une opération relativement longue, demandant une certaine dextérité de la part du monteur, susceptible de conduire en cas de positionnement relatif imparfait des pièces, à une déterioration de l'ensemble. Globalement, l'opération de montage s avère en conséquence délicate à mener rapidement et finalement d'un coût relatif élevé.

Le but assigné à la présente invention vise en conséquence précisément à porter remède aux divers inconvénients énumérés précédemment, et à fournir un système de maintien d'un élément chauffant en appui contre une surface à chauffer assurant à la fois une bonne isolation thermique de l'élément chauffant tout en le maintenant parfaitement et solidement en appui contre la surface à chauffer et dont le montage est particulièrement simple et rapide à effectuer.

Un objet complémentaire de l'invention vise à fournir un système de maintien d'un élément chauffant capable quelles que soient les sollicitations mécaniques subies par le système, d'assurer un bon appui relatif des différentes pièces du système.

Un objet complémentaire à l'invention vise à fournir un système de maintien simplifié et au nombre de pièces réduit.

Les objets assignés à l'invention sont atteints à l'aide d'un système de maintien d'un élément chauffant en appui contre une surface à chauffer, comportant :
. un moyen de compression agissant par une face sur l'élément chauffant pour le maintenir en appui contre ladite surface et monté, par une autre face, contre un moyen support,
. des moyens de blocage en position du système, caractérisé en ce que :
   - le moyen de compression comprend une série de pièces de maintien réalisées en un matériau souple et isolant thermique, chaque pièce comportant un jambage surmonté par une tête d'appui laquelle forme d'une part, des épaulements par rapport au jambage dans sa partie inférieure, et d'autre part une surface de compression dans sa partie supérieure,
   - le moyen support comprend une série de logements de configuration et de dimension appropriées pour recevoir chacun un jambage avec les épaulements en contact avec la périphérie du logement de manière que lors du blocage en position des pièces par mise en oeuvre des moyens de blocage, la surface de compression reste en appui contre l'élément chauffant et les épaulements transmettent au moyen support l'effort de réaction.

D'autres caractéristiques préférentielles sont contenues dans les revendications dépendantes 2-9.

Les caractéristiques et avantages de l'invention ressortiront mieux à la lecture de la description donnée ci-après à titre d'exemple non limitatif et en référence aux dessins annexés dans lesquels :
- la figure 1 représente selon une coupe transversale de la partie inférieure d'une cafetière filtre, une première variante de réalisation d'un système de maintien conforme à l'invention.
- la figure 2 montre selon une coupe transversale de la partie inférieure d'une cafetière filtre, une seconde variante de réalisation d'un système de maintien conforme à l'invention.
- la figure 3 représente selon une vue en perspective une variante préférentielle d'une pièce de maintien conforme à l'invention.
- les figures 4 à 6 montrent, selon des vues en coupe transversale, des variantes de réalisation de pièces de maintien conformes à l'invention.

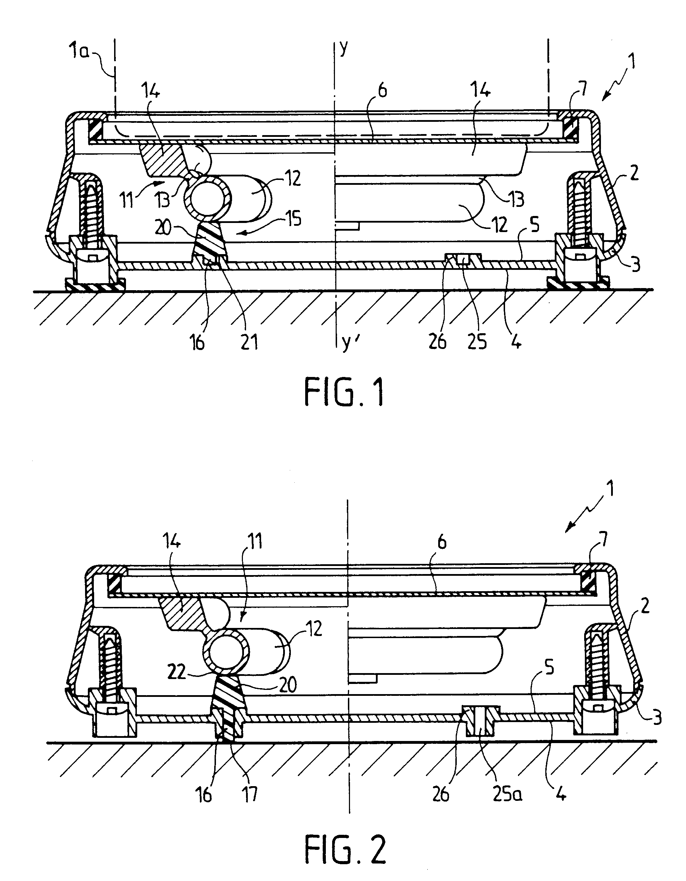

La figure 1 montre, à titre d'exemple illustratif et préférentiel, l'incorporation d'un système de maintien conforme à l'invention dans le bloc de chauffage et de support d'une verseuse de cafetière filtre.

Le bloc support chauffant 1 montré à la figure 1 définit un réceptacle formé par un corps principal 2, par exemple partiellement de révolution autour d'un axe y-y' sur lequel est rapporté par tout moyen approprié, et par exemple par vissage ou clipsage, un fond 3 délimitant une face externe 4 et une face interne 5. La partie supérieure du bloc 1 est fermée par une surface à chauffer 6, de préférence en matériau métallique bon conducteur de la chaleur, constituant une plaque de chauffage et de support pour la verseuse la d'une cafetière non représentée sur les figures. L'étanchéité entre l'intérieur du bloc 1 et l'extérieur est assuré de manière classique par l'interposition d'un joint souple 7 entre la partie supérieure du bloc 1 et la périphérie de la plaque métallique 6.

Le bloc support chauffant 1 comporte intérieurement un élément chauffant 11 du type pompe thermique. Ce type de pompe est bien connu dans le domaine des cafetières-filtre comme moyen de chauffage et de pompage de l'eau nécessaire à la confection du café-boisson. Une conduite tubulaire 12 à l'intérieur de laquelle circule l'eau est solidaire d'une résistance électrique tubulaire 14 du type blindée. L'élément chauffant 11 est en appui contre la face inférieure de la plaque 6, par l'intermédiaire de l'extrémité supérieure de la résistance tubulaire 14. L'élément chauffant 11 est maintenu en compression contre la face inférieure de la plaque 6 par l'intermédiaire d'un moyen de compression comprenant une série de pièces de maintien 15 interposées entre la conduite tubulaire 12 et la face interne 5 du fond 3. Les pièces de maintien 15 sont réalisées de préférence en tout matériau plastique présentant de bonnes propriétés de souplesse de manière à absorber par déformation les efforts de compression. De manière avantageuse, le matériau sélectionné possèdera également de bonnes caractéristiques d'isolation thermique afin de réduire la diffusion de chaleur entre l'élément chauffant 11 et le fond 3. A titre d'exemple non limitatif le matériau plastique choisi pourra être du silicone de préférence naturel.

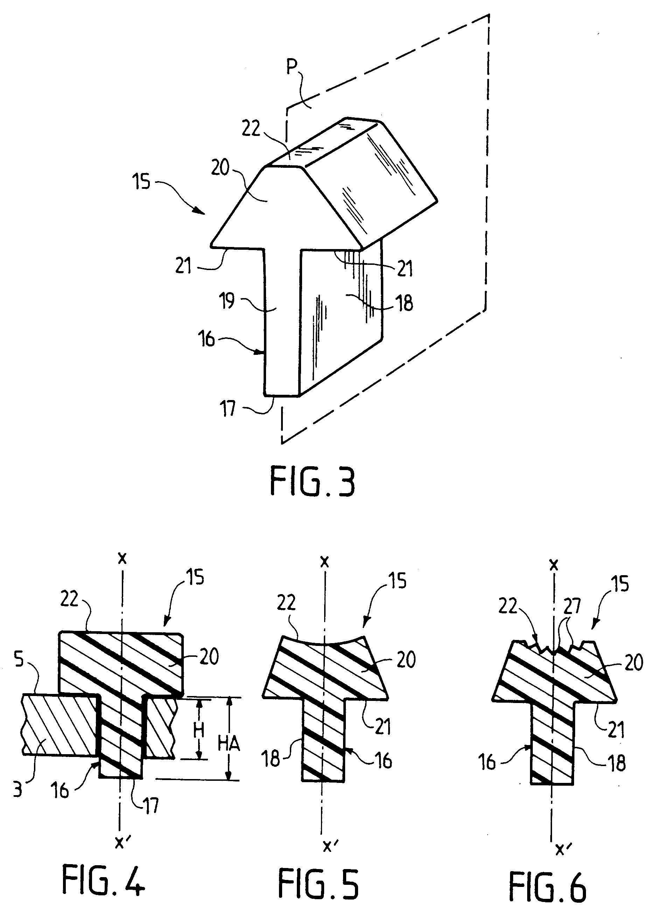

Les pièces de maintien 15 comportent comme cela est montré en particulier à la figure 3, un jambage principal 16, de préférence d'épaisseur constante, formant un parallélépidède du type rectangle présentant un plan de symétrie P, une base 17, des faces latérales 18 des faces avant et arrière 19. L'extrémité supérieure du jambage 16, opposée à la base 17, est surmontée d'une tête d'appui 20 présentant avantageusement le même plan de symétrie P que le jambage 16 et faisant saillie, au moins dans sa partie inférieure, au dessus du jambage 16, et hors de son enveloppe externe et de préférence hors son enveloppe latérale définie par les plans d'extension des parois latérales 18. Une telle conformation en saillie de la tête d'appui 20 permet la réalisation d'épaulements 21 par rapport aux faces latérales 18, dans la partie inférieure de ladite tête d'appui 20. Avantageusement, les épaulements 21 sont réalisés de manière symétrique par rapport au plan de symétrie P du jambage 16 et présentent un angle d'ouverture variable préférentiellement droit. La partie supérieure de la tête d'appui 20 définit une surface de compression 22 de préférence plane. Dans l'exemple particulier de réalisation montré aux figures 1, 2 et 3, la tête d'appui 20 présente une section transversale en forme de quadrilatère, de préférence régulier, symétrique par rapport à l'axe longitudinal de symétrie x-x' du jambage 16. Dans une telle réalisation, la grande base forme avec le jambage 16 les épaulements 21, alors que la petite base sert à délimiter la surface de compression 22.

Le fond 3 constitue le moyen support des pièces d'appui 15 et comprend à cet effet dans son épaisseur une série de logements 25 de configuration et de dimension appropriées et adaptées aux jambages 16 de manière que ces derniers puissent être insérés et reçus dans chacun des logements 25, les épaulements 21 étant en contact avec la périphérie dudit logement. Dans l'exemple montré à la figure 1, le logement 25 est aménagé dans une surépaisseur du fond 3 de manière à définir en périphérie une bordure de contact 26 pour les épaulements 21. Il est bien évident que la réalisation d'une telle bordure de contact 26 est facultative, et que les épaulements 21 peuvent venir directement en contact avec la face interne 5.

La mise en place du jambage 16 dans les logements 25 avec les épaulements 21 en contact de surface avec le fond 3 permet, lors du blocage en position des pièces de maintien 15 au cours du montage, par exemple par vissage du fond 3 sur le corps 2, à la surface de compression 22 de venir en appui contre l'élément chauffant 11. Dans un tel cas, le moyen de fixation du fond 3 sur le corps 2 constitue les moyens de blocage en position des pièces de soutien 15, et les épaulements 21 transmettent au fond 3 l'effort de réaction provenant de l'appui de l'élément chauffant 11 contre la surface de compression 22. L'ensemble est ainsi fermement maintenu en place à la fois par la compression relative des différents éléments entre eux, et par l'ancrage du jambage 16 à l'intérieur du logement 25 évitant toute instabilité latérale, ainsi que par une bonne reprise des efforts de compression au niveau des épaulements 21.

La figure 2 montre une variante de réalisation qui ne diffère de celle montrée à la figure 1 que par la réalisation de logements 25a constitués de perçage à travers le fond 3. Une telle particularité permet l'insertion de pièces de maintien 15 dont le jambage 16 présente une hauteur HA supérieure à l'épaisseur H du logement 25 comme cela est montré par exemple à la figure 4. Dans une telle variante de réalisation lorsque les épaulement 21 viennent en appui contre la face interne 5, et que la surface de compression 22 est appliquée contre l'élément chauffant 11, la base 17 des jambages 16 se projette à l'extérieur du support 3 pour venir constituer des pieds supports du bloc 1 tel que cela est montré à la figure 2.

Les pièces de maintien 15 peuvent être réalisées de diverses manières sans pour autant sortir du cadre de l'invention et en particulier la tête d'appui 20 peut présenter différentes formes géométriques et par exemple, faire saillie sur tout ou partie de l'enveloppe externe du jambage 16, lequel peut présenter une section transversale quelconque rectangulaire, carrée, circulaire ou autre. Ainsi la tête d'appui peut présenter une section transversale en forme de volume de révolution, autour de l'axe longitudinal x-x' du jambage 16, tel qu'un tron de cône (non représenté aux figures). La tête d'appui 20 peut également présenter une section transversale en forme de rectangle (figure 4), ou de carré.

Il est possible d'améliorer l'appui et le maintien de l'élément chauffant 11 en adaptant au moins en partie la surface de compression 22 à la forme de la zone de l'élément chauffant 11 destinée à venir en contact avec ladite surface 22. Dans le cadre d'un élément chauffant 11 présentant une conduite tubulaire 12, la surface 22 peut, tel que cela est montré à la figure 5, être constituée d'une surface courbe présentant sa concavité tournée vers l'extérieur de la pièce de maintien 15. L'amélioration du maintien peut encore être amélioré en réalisant une surface de compression 22 pourvue de moyens antiglissements telles que des rainures 27 (figure 6). Ces moyens antiglissements peuvent être réalisés en conformant directement la surface de compression 22 ou bien consister en un moyen complémentaire rapporté, par exemple par collage, sur la surface de compression 22.

Dans les exemples de réalisations préférentielles décrits précédemment, le système de maintien conforme à l'invention a été présenté dans l'application à un appareil électroménager constitué d'une cafetière filtre dans laquelle la surface à chauffer 6 est constituée de la plaque support de la verseuse. Bien évidemment le système de maintien d'un élément chauffant conforme à l'invention peut être appliqué dans le même domaine technique à d'autres appareils nécessitant le recours à un élément chauffant analogue destiné à remplir une fonction équivalente.

Dans l'exemple préférentiel donné, la série de pièces de maintien 11 comporte au moins deux pièces de maintien disposées de préférence de manière symétrique par rapport à l'axe de symétrie vertical y, y' du bloc 1.

Le recours à des pièces de maintien 15 conformes à l'invention permet de simplifier et de réduire le temps consacré au montage des divers éléments du bloc 1, tout en assurant un maintien solide de l'élément chauffant contre la surface à chauffer. Il suffit en effet de positionner chaque jambage 16 dans le logement 25 prévu à cette effet puis après avoir positionné correctement l'élément chauffant 11, de procéder à la fermeture et au blocage en position du fond 3 contre le corps 2. Le prépositionnement des pièces de maintien 15, ainsi que leurs bonnes propriétés d'élasticité évite de fausses manipulations ainsi que les risques de détoriation des pièces. Il doit également être noté que la dissipation thermique en direction du fond 3 est limitée en raison des propriétés d'isolation thermique du matériau constituant les pièces de maintien 15. Enfin la double fonction assumée par les pièces de maintien à savoir la compression de l'élément chauffant 11 et le support de l'ensemble bloc 1 à l'aide de la base 17 permet de réduire substantiellement le coût final de l'objet réalisé en supprimant la nécessité de prévoir sur le bloc 1 les pieds supports. Il convient également de remarquer que les deux fonctions assumées par les pièces de maintien dans ce dernier cas se renforcent mutuellement constribuant à la rigidité et à la solidité de l'ensemble réalisé.

## Revendications

1. Système de maintien d'un élément chauffant (11) en appui contre une surface à chauffer (6), comportant :
. un moyen de compression (15) agissant par une face sur l'élément chauffant (11) pour le maintenir en appui contre ladite surface (6) et monté, par une autre face, contre un moyen support (3),
. des moyens de blocage en position du système, caractérisé en ce que :
- le moyen de compression comprend une série de pièces de maintien (15) réalisées en un matériau souple et isolant thermique, chaque pièce (15) comportant un jambage (16) surmonté par une tête d'appui (20) laquelle forme d'une part, des épaulements (21) par rapport au jambage (16) dans sa partie inférieure, et d'autre part une surface de compression (22) dans sa partie supérieure,
- le moyen support (3) comprend une série de logements (25, 25a) de configuration et de dimension appropriées pour recevoir chacun un jambage (16) avec les épaulements (21) en contact avec la périphérie du logement de manière que lors du blocage en position des pièces (15) par mise en oeuvre des moyens de blocage, la surface de compression (22) reste en appui contre l'élément chauffant (11) et les épaulements (21) transmettent au moyen support (3) l'effort de réaction.

2. Système selon la revendication 1 caractérisé en ce que les logements (25a) sont constitués de perçages d'épaisseur (H) réalisés à travers le moyen support (3) et les jambages (16) sont d'une hauteur (HA) supérieure à (H) de manière qu'en position de blocage des pièces de maintien (15), la base (17) des jambages (16) forme, extérieurement aux perçages, des pieds support.

3. Système selon l'une des revendications précédente caractérisé en ce que la surface de compression (22) est plane ou courbe, et de préférence de conformation adaptée au moins en partie, à la zone de l'élément chauffant (11) avec laquelle elle est en contact.

4. Système selon la revendication 3 caractérisé en ce que la surface de compression (22) est pourvue de moyens anti-glissement, tels que des rainures (27).

5. Système selon l'une des revendications précédentes caractérisé en ce que la tête d'appui (20) présente une section transversale en forme de volume de révolution autour de l'axe longitudinal (x-x') du jambage (16).

6. Système selon l'une des revendications 1 à 4 caractérisé en ce que la tête d'appui (20) présente une section transversale en forme de quadrilatère.

7. Système selon la revendication 6 caractérisé en ce que le quadrilatère est un trapèze de préférence régulier et symétrique par rapport à l'axe longitudinal (x-x') dont la grande base forme avec le jambage (16), les épaulements (21) et dont la petite base forme la surface de compression (22).

8. Système selon l'une des revendications précédentes caractérisé en ce que les pièces de maintien (15) sont réalisées en matériau plastique et de préférence en silicone.

9. Appareil électroménager pourvu d'un système de soutien conforme à l'une des revendications 1 à 8.

10. Appareil électroménager selon la revendication 9 caractérisé en ce qu'il est constitué d'une cafetière dans laquelle la surface à chauffer (6) est constituée de la plaque support de la verseuse (1a).

## Claims

1. A system for holding a heater element (11) pressed against a surface to be heated (6), the system comprising:
compression means (15) acting via one face against the heater element (11) to hold it pressed against said surface (6), and mounted via another face against support means (3); and
locking means for locking the system in position;
the system being characterized in that:
the compression means comprise a series of support parts (15) made of a material that is flexible and thermally insulating, each part (15) comprising a leg (16) surmounted by a bearing head (20) having a bottom portion that forms shoulders (21) projecting relative to the leg (16), and having a top portion that forms a compression surface (22); and
the support means (3) include a series of housings (25, 25a) of shape and size that is appropriate for enabling each to receive one of the legs (16) with the shoulders (21) in contact with the periphery of the housing so that when the parts (15) are locked in place by implementing the locking means, the compression surfaces (22) remain pressed against the heater element (11) and the shoulders (21) transmit the reaction force to the support means (3).

2. A system according to claim 1, characterized in that the housings (25a) are constituted by holes of depth (H) formed through the support means (3) and the legs (16) are of height (HA) greater than (H), so that when the support parts (15) are locked in position, the bases (17) of the legs (16) form supporting feet on the outsides of the holes.

3. A system according to either preceding claim, characterized in that the compression surface (22) is plane or curved, and preferably shaped, at least in part, to match the zone of the heater element (11) with which it comes into contact.

4. A system according to claim 3, characterized in that the compression surface (22) is provided with anti-slip means, such as grooves (27).

5. A system according to any preceding claim, characterized in that the bearing head (20) has a cross-section in the form of a body of revolution about the longitudinal axis (x-x') of the leg (16).

6. A system according to any one of claims 1 to 4, characterized in that the bearing head (20) has a cross-section in the form of a quadrilateral.

7. A system according to claim 6, characterized in that the quadrilateral is a trapezium, that is preferably a regular trapezium, symmetrical about the longitudinal axis (x-x'), having its large base co-operating with the leg (16) to form the shoulders (21), and having its small base forming the compression surface (22).

8. A system according to any preceding claim, characterized in that the support parts (15) are made of a plastics material, and preferably of silicone.

9. An electrical household appliance provided with a support system according to any one of claims 1 to 8.

10. An electrical household appliance according to claim 9, characterized in that it constituted by a coffee maker in which the surface to be heated (6) is constituted by the plate for supporting a coffee pot (1a).

## Patentansprüche

1. Haltesystem für Heizelemente (11) in Anlage gegen eine heizbare Oberfläche (6) bestehend aus
- einem Druckmittel (15), das sich mit einer seiner Oberflächen auf ein Trägerteil (3) stützt und mit einer anderen Oberfläche auf das Heizelement (11) einwirkt, um letzteres in Anlage gegen die heizbare Oberfläche (6) zu halten,
- Festlegungsmittel zur Festlegung des Haltesystems in seiner Lage,dadurch gekennzeichnet, daß
- das Druckmittel eine Anzahl von aus einem elastischen, gute Wärmeisolationseigenschaften aufweisenden Material hergestellten Haltegliedern (15) umfaßt, wobei jedes Halteglied (15) einen von einem Stützkopf (20) überhöhten Pfosten (16) umfaßt und der Stützkopf (20) einerseits in seinem unteren Bereich über den Pfosten (16) hinausragende Vorsprünge (21) und andererseits in seinem oberen Bereich eine Druckfläche (22) aufweist,
- das Trägerteil (3) eine Anzahl von Aufnahmeausnehmungen (25) (25a) geeigneter Ausgestaltung und Größe umfaßt, wobei jede Ausnehmung den Pfosten (16) eines Halteglieds unter Anlage der Vorsprünge (21) auf ihrem Umfangsbereich aufnimmt, so daß bei Festlegung der Halteglieder in ihrer Lage durch Festlegungsmittel die Druckfläche (22) in Anlage gegen das Heizelement verbleibt und die Vorsprünge (21) dem Trägerteil (3) die Rückwirkungskräfte übertragen.

2. System nach Anspruch 1 dadurch gekennzeichnet, daß die Aufnahmeausnehmungen (25a) durch Durchlochungen von Höhe (HA) im Trägerteil (3) gebildet sind und die Pfosten (16) eine größere Höhe (H) aufweisen, so daß bei Festlegung der Halteglieder in ihrer Lage die Basen (17) der Pfosten (16) außerhalb der Durchlochungen Stützfüße bilden.

3. System nach einem der vorangehenden Ansprüche, dadurch gekennzeichnet, daß die Druckfläche (22) eben oder gewölbt ausgebildet ist und vorzugsweise in ihrer Ausbildung wenigstens teilweise dem entsprechenden Bereich des Heizelements, mit welchem sie zusammenwirkt, angepaßt ist.

4. System nach Anspruch 3, dadurch gekennzeichnet, daß die Druckfläche (22) mit Antirutschmitteln wie Rillen (27) versehen ist.

5. System nach einem der vorangehenden Ansprüche, dadurch gekennzeichnet, daß der Querschnitt des Stützkopfs (20) die Form eines sich um die Längsachse (x-x') des Pfostens (16) herum erstreckenden Volumens aufweist.

6. System nach einem der Ansprüche 1 bis 4, dadurch gekennzeichnet, daß der Stützkopf (20) eine viereckige Querschnittsform aufweist.

7. System nach Anspruch 6, dadurch gekennzeichnet, daß das Viereck ein vorzugsweise regelmäßiges, symmetrisch zur Längsachse (x-x') ausgerichtetes Trapez ist, dessen lange Parallelseite zusammen mit dem Pfosten (16) die Vorsprünge (21) und dessen kurze Parallelseite die Druckfläche (22) bildet.

8. System nach einem der vorangehenden Ansprüche, dadurch gekennzeichnet, daß die Halteglieder (15) aus Kunststoff, vorzugsweise aus Silikon hergestellt sind.

9. Elektro-Hausapparat mit einem Haltesystem gemäß den Ansprüchen 1 bis 8.

10. Elektro-Hausapparat mit einem Haltesystem nach Anspruch 9, dadurch gekennzeichnet, daß er aus einer Kaffeemaschine besteht, deren heizbare Oberfläche (6) durch die Trägerplatte der Kanne (1a) gebildet ist.
